# FASCICULE DE BREVET EUROPEEN

(11) **EP 4 249 240 B1**
(45) Date de publication et mention de la délivrance du brevet: **28.01.2026**
(21) Numéro de dépôt: 23163811.5
(22) Date de dépôt: 23.03.2023
(51) Int. Cl.: B32B 21/10, B60R 13/02, B32B 19/00, B32B 21/00, B32B 23/00, B32B 19/04, B32B 19/06, B29C 70/02, B29C 70/08, B29C 70/34, B29C 70/42, B29C 70/46, B29C 70/54, B60R 13/00, B32B 5/24, B29C 43/20

(54) **PROCÉDÉ DE FABRICATION D'UN ÉLÉMENT DE GARNISSAGE D'UN VÉHICULE ET ÉLÉMENT DE GARNISSAGE ASSOCIÉ**
VERFAHREN ZUR HERSTELLUNG EINES VERKLEIDUNGSELEMENTS FÜR EIN FAHRZEUG UND VERKLEIDUNGSELEMENT DAFÜR
METHOD OF MANUFACTURING A VEHICLE TRIM ELEMENT AND ASSOCIATED TRIM ELEMENT

(30) Priorité: 24.03.2022 FR 2202615
(43) Date de publication de la demande: 27.09.2023
(73) Titulaire: Faurecia Intérieur Industrie, 92000 Nanterre (FR)
(72) Inventeur: QUESNEL, Benjamin, 46015 VALENCIA (ES)
(74) Mandataire: Novagraaf Group

(56) Documents cités:
- US-A1- 2014 183 892
- US-A1- 2021 101 350

## Description

La présente invention concerne un procédé de fabrication d'un élément de garnissage d'un véhicule, comprenant les étapes suivantes :
- fourniture d'un substrat, le substrat comprenant des fibres naturelles et des fibres thermoplastiques, de préférence de polypropylène ou d'acide polylactique, les fibres naturelles et les fibres thermoplastiques étant enchevêtrées ensemble,
- fourniture d'une première couche, la première couche comprenant une couche de base en tissu ou en non-tissé, la première couche étant pourvue d'au moins un élément de renforcement et/ou de décoration, et
- compression de la première couche contre le substrat de sorte à solidariser la première couche au substrat et former l'élément de garnissage.

Le document US 2014/0284953 A1 décrit un élément de garnissage pour l'habitacle d'un véhicule comprenant un substrat réalisé à partie d'un matériau ayant au moins une substance naturelle, une couche décorative réalisée en un matériau ayant des fibres naturelles couvrant au moins partiellement une face visible du substrat, et une couche extérieure transparente ou translucide fourni au moins partiellement sur le substrat et/ou la couche décorative.

Les différentes couches sont placées les unes sur les autres puis thermo-pressées ensemble pour donner un élément bi ou tri-dimensionnel.

Cependant, il n'est pas précisé comment les couches sont placées les unes sur les autres, en particulier quant au positionnement des couches entre elles. Il existe ainsi un risque que la couche décorative soit mal positionnée sur le substrat, de sorte que l'élément de garnissage n'est pas satisfaisant. Le document US 2014/183892 A1 décrit un procédé de fabrication d'un élément de garnissage d'un véhicule.

Le document US 2015/0314737 A1 décrit l'utilisation d'un châssis dans lequel est positionné un tissu pour bien positionner le tissu dans un moule.

Cependant, il n'est pas décrit comment le tissu est positionné dans le moule.

De plus, cela nécessite un tel châssis.

Un objet de l'invention est donc de proposer un procédé de fabrication d'un élément de garnissage avec une première couche présentant au moins un élément de renforcement et/ou de décoration et un substrat pressé l'un à l'autre, dans lequel le positionnement de l'élément de renforcement et/ou de décoration est tel que souhaité.

A cet effet, l'invention a pour objet un procédé du type précité, dans lequel le substrat présente au moins un premier élément de positionnement, la première couche présentant au moins un deuxième élément de positionnement, l'au moins un deuxième élément de positionnement étant agencé en dehors de l'au moins un élément de renforcement et/ou de décoration, le procédé comprenant une étape d'alignement de la première couche et du substrat par alignement de l'au moins un premier élément de positionnement et de l'au moins un deuxième élément de positionnement avant l'étape de compression.

La présence des éléments de positionnement permet de positionner correctement la première couche, et ainsi l'au moins un élément de renforcement et/ou de décoration, sur le substrat. De plus, un tel positionnement est particulièrement aisé à mettre en oeuvre.

Le procédé de fabrication peut en outre présenter une ou plusieurs caractéristiques ci-dessous, considérée(s) inviduellement ou selon toutes les combinaisons techniquement possibles :
- l'au moins un premier élément de positionnement et l'au moins un deuxième élément de positionnement sont des orifices traversants définis respectivement dans le substrat et la première couche ;
- la première couche présente sensiblement la taille d'une première face du substrat ;
- la première couche présente une taille strictement inférieure à la taille d'une première face du substrat, la première couche s'étendant uniquement sur une première portion de la première face du substrat après l'étape de compression ;
- ladite première portion de la première face du substrat comprend au moins un bord du substrat, l'au moins un premier élément de positionnement étant agencé à proximité dudit bord du substrat ;
- la première couche est pressée contre une première face du substrat pendant l'étape de compression, le procédé comprenant l'étape de fourniture d'une deuxième couche comprenant une couche de tissu ou de non-tissé, la deuxième couche étant pourvue d'au moins un élément de renforcement et/ou de décoration additionnel, la deuxième couche présentant au moins un troisième élément de positionnement, l'au moins un troisième élément de positionnement étant agencé en dehors de l'au moins un élément de renforcement et/ou de décoration additionnel, la deuxième couche étant alignée avec la première couche et le substrat pendant l'étape d'alignement par alignement de l'au moins un troisième élément de positionnement avec l'au moins un premier élément de positionnement et l'au moins un deuxième élément de positionnement, la deuxième couche étant pressée contre une deuxième face du substrat pendant l'étape de compression, la deuxième face étant opposée à la première face ;
- l'au moins un élément de renforcement et/ou de décoration de la première couche est une couche à renforcement uni- ou multi-directionnel tissé ou non-tissé ;
- l'au moins un élément de renforcement et/ou de décoration de la première couche comprend une matrice et des fibres naturelles, la matrice comprenant entre 10% et 60% de polyuréthane ou de résine époxy ; et/ou
- la couche de base de la première couche comprend au moins 20% de polypropylène, au moins 20% de polyamide, au moins 20% de polyester, ou au moins 20% d'acide polylactique ou est pourvue d'une couche agrippante.

L'invention concerne en outre un élément de garnissage pour véhicule obtenu par le procédé de fabrication du type précédent.

D'autres caractéristiques et avantages de l'invention apparaîtront à la lecture de la description qui suit de modes de réalisation de l'invention, donnée à titre d'exemple uniquement et en référence aux dessins dans lesquels :
la figure 1 est une vue schématique du principe d'un exemple de procédé de fabrication d'un élément de garnissage selon un mode de réalisation de l'invention, et
la figure 2 est une vue d'un exemple d'élément de garnissage obtenu par un procédé selon un mode de réalisation de l'invention.

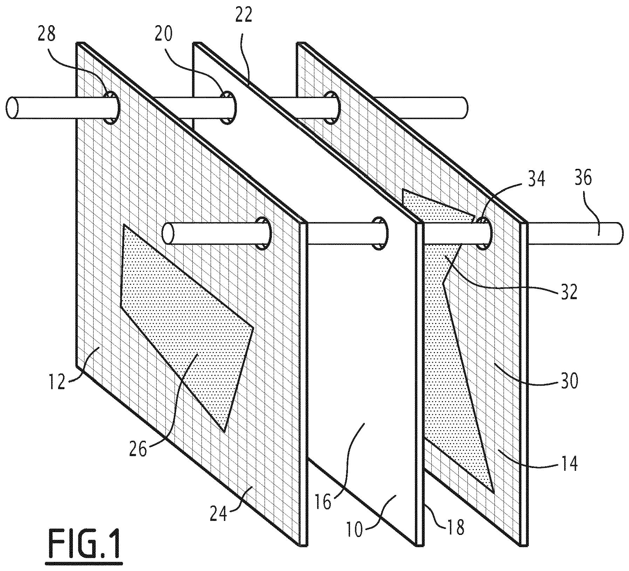

Une représentation schématique du principe d'un exemple de procédé de fabrication d'un élément de garnissage pour véhicule est visible à la figure 1.

Le procédé comprend les étapes suivantes :
- fourniture d'un substrat 10,
- fourniture d'une première couche 12,
- alignement de la première couche 12 et du substrat 10, et
- compression de la première couche 12 contre le substrat 10.

Dans un mode de réalisation particulier, le procédé comprend, en outre, l'étape additionnelle de fourniture d'une deuxième couche 14.

Le substrat 10 présente une première face 16, ici destinée à être orientée vers l'intérieur d'un habitacle d'un véhicule, et une deuxième face 18, opposée à la première face 16.

Le substrat 10 comprend des fibres naturelles, plus particulièrement de longues fibres naturelles, et des fibres thermoplastiques, en particulier de polypropylène ou d'acide polylactique.

Les fibres naturelles et les fibres thermoplastiques sont enchevêtrées ensemble.

Le substrat 10 est, par exemple, formé par au moins une étape d'aiguilletage de l'ensemble formé par les fibres naturelles et les fibres thermoplastiques.

On entend par longues fibres naturelles, des fibres naturelles présentant une longueur comprise entre 10 et 90 millimètres.

Les fibres naturelles sont, par exemple, des fibres de bois, de kénaf, de chanvre ou de lin.

Les fibres naturelles présentent un titre compris entre 6 dtex et 7 dtex, 1 tex étant la masse en grammes de mille mètres d'une de ces fibres.

Le substrat comprend entre 200 et 1500 grammes de fibres naturelles par mètres carré de surface.

Le substrat 10 est un substrat non tissé.

Selon l'invention, le substrat 10 présente au moins un premier élément de positionnement 20, ici une pluralité, plus particulièrement deux premiers éléments de positionnement.

Les premiers éléments de positionnement 20 sont, par exemple, des orifices traversant le substrat et définis dans le substrat 10.

Le ou chaque premier élément de positionnement 20 est, par exemple, agencé à proximité d'un bord 22 du substrat 10, plus particulièrement à une distance inférieure à 100 mm dudit bord 22 du substrat 10.

Dans l'exemple représenté, le substrat 10 présente au moins un élément de positionnement 20 à proximité de chaque extrémité dudit bord 22 du substrat, plus particulièrement à une distance inférieure à 100 mm de ladite extrémité.

La première couche 12 comprend ici une couche de base 24, en tissu ou en non-tissé, et est pourvue d'au moins un élément de renforcement et/ou de décoration 26.

La première couche 12 présente une épaisseur inférieure à 5 mm.

L'au moins un élément de renforcement et/ou de décoration 26 est agencé sur la couche de base 24.

L'au moins un élément de renforcement et/ou de décoration 26 est agencé ici indifféremment d'un côté ou de l'autre de la première couche 12.

Dans un mode de réalisation, l'au moins un élément de renforcement et/ou de décoration 26 est agencé sur la face de la première couche 12 destinée à s'étendre à l'opposé du substrat 10.

Alternativement, l'au moins un élément de renforcement et/ou de décoration 26 est agencé sur la face de la première couche 12 destinée à s'étendre contre le substrat 10.

L'élément 26 est, par exemple, fixé sur la couche de base 24, par thermo fixation ou par emboutissage, avec par exemple un positionnement à plat par un robot avant une étape de calandrage.

La couche de base 24 est telle qu'elle est apte à solidariser l'au moins un élément de renforcement et/ou de décoration 26 au substrat 10 par compression, plus particulièrement thermocompression, comme décrit ci-après.

La couche de base 24 est, par exemple, un non-tissé.

La couche de base 24 comprend, par exemple, au moins 20% de polypropylène, au moins 20% de polyamide, au moins 20% de polyester, ou au moins 20% d'acide polylactique.

La couche de base 24 comprend, en outre, au moins 30% de contenu biosourcé, c'est-à-dire entièrement ou partiellement fabriqué à partir de matières d'origine biologique.

La couche de base 24 présente une masse surfacique comprise entre 80 et 100 grammes par mètre carré.

L'au moins un élément de renforcement et/ou de décoration 26 s'étend uniquement sur une portion de la couche de base 24.

L'au moins un élément de renforcement et/ou de décoration 26 est une couche à renforcement uni- ou multi-directionnel tissé ou non-tissé.

L'au moins un élément de renforcement et/ou de décoration 26 est constitué d'au moins 80% massique de matériau(x) naturel(s).

L'au moins un élément de renforcement et/ou de décoration 26 présente une masse surfacique comprise entre 50 et 300 grammes par mètre carré.

L'au moins un élément de renforcement et/ou de décoration 26 est, par exemple, un élément composite comprenant, par exemple, une matrice chargée en fibres naturelles.

La matrice comprend, par exemple, entre 10% et 60% de polyuréthane ou de résine époxy. La résine époxy comprend, par exemple, une portion de résine biosourcée.

L'au moins un élément de renforcement et/ou de décoration 26 comprend entre 40 et 200 grammes de fibres naturelles par mètre carré de surface.

Les fibres naturelles sont, par exemple, orientées selon au moins une direction de renforcement, par exemple selon une unique direction de renforcement.

La première couche 12 présente au moins un deuxième élément de positionnement 28, ici une pluralité, plus particulièrement deux deuxièmes éléments de positionnement.

L'au moins un deuxième élément de positionnement 28 est agencé en dehors de l'au moins un élément de renforcement et/ou de décoration 26.

Les deuxièmes éléments de positionnement 28 sont des orifices traversant la première couche 12 et définis dans la première couche 12, plus particulièrement traversant la couche de base 24 et définis dans la couche de base 24, plus particulièrement traversant une portion de la couche de base 24 dépourvue d'élément de renforcement et/ou de décoration, dite portion nue de la couche de base 24, et définis dans ladite portion nue de couche de base 24.

La première couche 12 présente le même nombre de deuxièmes éléments de positionnement 28 que le substrat 10 présente de premiers éléments de positionnement 20.

Les deuxièmes éléments de positionnement 28 sont placés relativement les uns aux autres similairement aux emplacements relatifs des premiers éléments de positionnement entre eux 20.

Ainsi, il existe une position relative de la première couche 12 par rapport au substrat 10, dans laquelle les premiers éléments de positionnement 20 et les deuxièmes éléments de positionnement 28 sont alignés.

Dans l'exemple représenté, la première couche 12 présente sensiblement la forme et la taille de la première face 16 du substrat.

Les deuxièmes éléments de positionnement 28 sont agencés sur la première couche 12 similairement aux premiers éléments de positionnement 20 sur le substrat 10, c'est-à-dire que, lorsque la première couche 12 et le substrat 10 sont superposés avec leurs bordures respectives alignées, les premiers éléments de positionnement 20 et les deuxièmes éléments de positionnement sont alignés.

La deuxième couche 14 est, par exemple, similaire à la première couche 12.

La deuxième couche 14 comprend ici une couche de base 30 en tissu ou en non-tissé et est pourvue d'au moins un élément de renforcement et/ou de décoration additionnel 32.

La deuxième couche 14 présente une épaisseur inférieure à 5 mm.

L'au moins un élément de renforcement et/ou de décoration additionnel 32 est agencé sur la couche de base 30.

L'au moins un élément de renforcement et/ou de décoration additionnel 32 est agencé ici indifféremment d'un côté ou de l'autre de la deuxième couche 14.

La couche de base 30 est telle qu'elle est apte à solidariser l'au moins un élément de renforcement et/ou de décoration additionnel 32 au substrat 10 par compression, plus particulièrement thermocompression, comme décrit ci-après.

Dans un mode de réalisation, l'au moins un élément de renforcement et/ou de décoration additionnel 32 est agencé sur la face de la deuxième couche 14 destinée à s'étendre contre le substrat 10.

Alternativement, l'au moins un élément de renforcement et/ou de décoration additionnel 32 est agencé sur la face opposée à ladite face.

La couche de base 30 de la deuxième couche 14 est, par exemple, identique à la couche de base 24 de la première couche 12.

L'au moins un élément de renforcement et/ou de décoration additionnel 32 s'étend uniquement sur une portion de la couche de base 30.

L'au moins un élément de renforcement et/ou de décoration additionnel 32 est, par exemple, tel que décrit précédemment en regard de l'au moins un élément de renforcement et/ou de décoration 26.

Alternativement, l'au moins un élément de renforcement et/ou de décoration additionnel 32 est différent de l'au moins un élément de renforcement et/ou de décoration 26. Par exemple, l'élément de renforcement et/ou de décoration additionnel 32 comprend, plus particulièrement est constitué de, entre 40% et 60% de polypropylène et entre 40% et 60% de longues fibres naturelles. L'au moins un élément de renforcement et/ou de décoration additionnel 32 présente alors, par exemple, une masse surfacique comprise entre 250 et 350 grammes par mètre carré.

La deuxième couche 14 présente au moins un troisième élément de positionnement 34, ici une pluralité, plus particulièrement deux troisièmes éléments de positionnement.

L'au moins un troisième élément de positionnement 34 est agencé en dehors de l'au moins un élément de renforcement et/ou de décoration additionnel 32.

Les troisièmes éléments de positionnement 34 sont des orifices traversant la deuxième couche 14 et définis dans la deuxième couche 14, plus particulièrement traversant la couche de base 30 et définis dans la couche de base 30, plus particulièrement traversant une portion de la couche de base 30 dépourvue d'élément de renforcement et/ou de décoration, dite portion nue de la couche de base 30, et définis dans ladite portion nue de couche de base 30.

La deuxième couche 14 présente le même nombre de troisièmes éléments de positionnement 34 que le substrat 10 présente de premiers éléments de positionnement 20.

Les troisièmes éléments de positionnement 34 sont placés relativement les uns aux autres similairement aux emplacements relatifs des premiers éléments de positionnement entre eux 20.

Ainsi, il existe une position relative de la deuxième couche 14 par rapport au substrat 10, dans laquelle les premiers éléments de positionnement 20 et les troisièmes éléments de positionnement 34 sont alignés.

Dans l'exemple représente, la deuxième couche 14 présente sensiblement la forme et la taille de la deuxième face 18 du substrat.

Les troisièmes éléments de positionnement 34 sont agencés sur la deuxième couche 14 similairement aux premiers éléments de positionnement 20 sur le substrat 10, c'est-à-dire que, lorsque la deuxième couche 14 et le substrat 10 sont superposés avec leurs bordures respectives alignées, les premiers éléments de positionnement 20 et les troisièmes éléments de positionnement 34 sont alignés.

Après les étapes de fourniture respectives, la première couche 12 et le substrat 10, et le cas échéant la deuxième couche 14, sont alignés par alignement de l'au moins un premier élément de positionnement 20 et de l'au moins un deuxième élément de positionnement 28, et le cas échéant de l'au moins un troisième élément de positionnement 34.

La première couche 12 s'étend en regard de la première face 16 du substrat 10.

Le cas échéant, la deuxième couche 14 s'étend en regard de la deuxième face 18 du substrat 10.

Chacun du substrat 10 et de la première couche 12, et le cas échéant la deuxième couche 14, sont, par exemple, placés sur une même structure présentant des éléments de positionnement complémentaires 36.

Plus particulièrement, la structure comprend autant d'éléments de positionnement complémentaires que le substrat 10 ne comprend de premiers éléments de positionnement 20.

Les éléments de positionnement complémentaires 36 sont, par exemple, des mâts droits, ici horizontaux.

La première couche 12 et le substrat 10, et le cas échéant la deuxième couche 14, sont insérés sur la structure l'un après l'autre, de sorte qu'un mât respectif est inséré dans chaque orifice traversant formant un élément de positionnement.

La première couche 12 s'étend directement contre le substrat 10, et, le cas échéant, la deuxième couche 14 s'étend également directement contre le substrat 10 à l'opposé de la première couche 12.

Chacun de la première couche 12, du substrat 10, et le cas échéant de la deuxième couche 14 s'étend ici verticalement sur la structure.

Les éléments de positionnement de la première couche 12, du substrat 10 et le cas échéant de la deuxième couche 14 sont alignés le long des éléments de positionnement complémentaires 36, ici le long des mâts.

Ainsi, la première couche 12 et le substrat 10, et le cas échéant la deuxième couche 14, sont alignés, de sorte que les éléments de renforcement et/ou de décoration 26, 32 sont correctement positionnés.

La structure transporte alors, par exemple, l'ensemble à un moule de compression.

Puis, la première couche 12, et le cas échéant la deuxième couche 14, est (sont) pressé(s) contre le substrat de sorte à solidariser la première couche 12, et le cas échéant la deuxième couche 14, au substrat 10 et former l'élément de garnissage

La première couche 12 est pressée contre la première face 16 du substrat 10 pendant l'étape de compression.

Le cas échéant, la deuxième couche 14 est pressée contre la deuxième face 18 du substrat 10 pendant l'étape de compression.

L'étape de compression est, par exemple, réalisée par thermoformage par compression, dans le moule de compression.

L'étape de compression est réalisée à une température comprise entre 150°C et 250ºC.

La couche de base 24 de la première couche 12, et le cas échéant la couche de base 30 de la deuxième couche 14, assurent l'union des éléments de renforcement et/ou de décoration 26, 32 avec le substrat 10.

Les fibres entre le substrat 10 et la couche de base 24, et le cas échéant la couche de base 30, créent ici des liaisons chimiques lors de la thermocompression, pour assurer la fixation.

Additionnellement, l'élément obtenu après l'étape de compression est découpé dans la forme souhaitée.

Additionnellement, un film (non représenté) est, par exemple, thermoformé avec la première couche 12 lors de l'étape de compression. Plus particulièrement, le film est agencé sur la surface de la première couche 12 opposée au substrat 10 avant l'étape de compression. Le film comprend, par exemple, plus particulièrement est constitué de, polypropylène ou polycarbonate ou polyuréthane et un ou des matériaux biosourcés.

Le film présente, par exemple, similairement des éléments de positionnement, de manière à être correctement placé sur la première couche 12.

Dans un mode de réalisation alternatif non représenté, la première couche 12 présente une taille strictement inférieure à la taille de la première face 16 du substrat 10, la première couche 12 s'étendant uniquement sur une première portion de la première face 16 du substrat 10 après l'étape de compression.

Ladite première portion comprend les emplacements de l'au moins un premier élément de positionnement 20. Ladite première portion de la première face du substrat 10 comprend, en outre, ici le bord 22 du substrat 10.

Additionnellement ou alternativement, la deuxième couche 14 présente une taille strictement inférieure à la taille de la deuxième face 18 du substrat 10, la deuxième couche 14 s'étendant uniquement sur une deuxième portion de la deuxième face 18 du substrat 10 après l'étape de compression. Ladite deuxième portion de la deuxième face du substrat 10 comprend ici le bord 22 du substrat 10.

Ladite deuxième portion comprend les emplacements de l'au moins un premier élément de positionnement 20. Ladite deuxième portion de la première face du substrat 10 comprend, en outre, ici le bord 22 du substrat 10.

Ainsi, dans le procédé selon l'invention, les éléments de renforcement et/ou décoration 26, 32 sont placés tel que souhaités au sein de l'élément de garnissage, les différentes couches et le substrat étant alignés pour permettre un positionnement correct.

Dans un mode de réalisation alternatif au mode de réalisation décrit précédemment, la couche de base 24 et/ou la couche de base additionnelle 30 présente additionnellement, par exemple, une couche agrippante sur la face prévue pour s'étendre en regard du substrat 10. La couche agrippante est adaptée pour coopérer avec les fibres du substrat 10, c'est-à-dire à agripper les fibres du substrat 10.

La couche agrippante est ici la couche agrippante d'une fermeture autoagrippante, du type dit Velcro ^{®}.

Alternativement, la couche de base 24 et/ou la couche de base additionnelle 30 sont dépourvues de la couche agrippante, mais une telle couche agrippante est prévue sur la face du substrat 10 adaptée pour s'étendre en regard de la couche de base 24 et/ou de la couche de base additionnelle 30.

Alternativement, une de la couche de base 24 et/ou de la couche de base additionnelle 30 est pourvue d'une telle couche agrippante sur la face prévue pour s'étendre en regard du substrat 10, le substrat présentant une telle couche agrippante en regard de l'autre de la couche de base 24 et/ou de la couche de base additionnelle 30.

Dans un autre mode de réalisation alternatif au mode de réalisation principal décrit précédemment, la couche de base 24 et/ou la couche de base additionnelle 30 présente additionnellement, par exemple, de la colle sur la face prévue pour s'étendre contre le substrat 10.

L'invention concerne en outre un élément de garnissage obtenu par le procédé décrit précédemment.

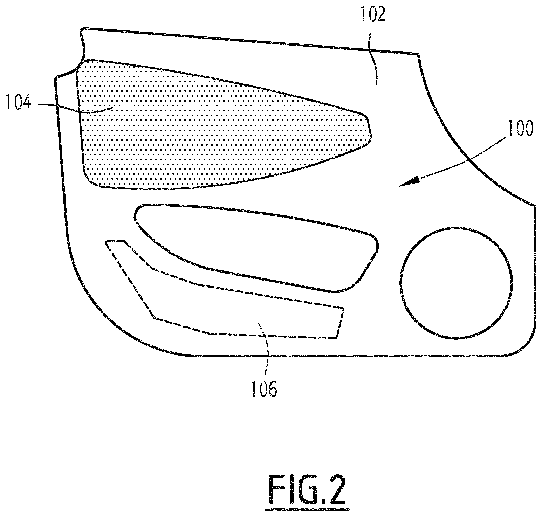

Un exemple d'un tel élément de garnissage 100 est représenté sur la figure 2.

L'élément de garnissage 100 est, par exemple, un panneau de porte de véhicule.

L'élément de garnissage 100 présente une première face 102 prévue pour s'étendre en regard de l'habitacle d'un véhicule et une deuxième face opposée.

L'élément de garnissage 100 comprend un couche centrale formée par le substrat, une première couche et, ici une deuxième couche, telles que décrites précédemment.

La couche centrale, la première couche et la deuxième couche sont thermoformées par compression entre elles en l'élément de garnissage, comme décrit précédemment.

L'élément de garnissage 100 comprend ici un élément de décoration 104 sur la première face 102 et un élément de renforcement 106 sur la deuxième face.

L'élément de décoration 104 fait partie de la première couche.

L'élément de renforcement 106 fait partie de la deuxième couche.

L'élément de décoration 104 et l'élément de renforcement 106 sont positionnés précisément grâce au procédé décrit ci-dessus.

En effet, comme décrit précédemment, la première couche, le substrat, et la deuxième couche le cas échéant, présentent des éléments de positionnements, lesdits éléments de positionnements permettent un positionnement précis des éléments de décoration et/ou renforcement sur le substrat par alignement des éléments de positionnements entre eux.

Un tel élément de garnissage est ici avantageusement dépourvu de colle, la couche de base de la première couche et de la deuxième couche assurant l'union de l'élément correspondant 104, 106 au substrat.

Dans un mode de réalisation, l'élément de garnissage présente les éléments de positionnements de la première couche, du substrat et de la deuxième couche le cas échéant alignés.

Alternativement, l'ensemble formé de la première couche, du substrat et de la deuxième couche le cas échéant est découpé après l'étape de compression, de sorte que les éléments de localisation ne sont pas compris dans l'élément de garnissage final.

Lors de la fabrication, la présence des éléments de positionnement permet de positionner correctement la première couche et éventuellement la deuxième couche, et ainsi l'au moins un élément de renforcement et/ou de décoration, sur le substrat.

De plus, un tel positionnement est particulièrement aisé à mettre en oeuvre, par simple alignement des éléments de positionnement, en particulier par simple insertion de chaque couche sur des mâts, sur lesquels les éléments de positionnement sont donc automatiquement alignés.

## Revendications

1. Procédé de fabrication d'un élément de garnissage d'un véhicule, comprenant les étapes suivantes :
- fourniture d'un substrat (10), le substrat (10) comprenant des fibres naturelles et des fibres thermoplastiques, de préférence de polypropylène ou d'acide polylactique, les fibres naturelles et les fibres thermoplastiques étant enchevêtrées ensemble,
- fourniture d'une première couche (12), la première couche (12) comprenant une couche de base (24) en tissu ou en non-tissé, la première couche (12) étant pourvue d'au moins un élément de renforcement et/ou de décoration (26), et
- compression de la première couche (12) contre le substrat (10) de sorte à solidariser la première couche (12) au substrat (10) et former l'élément de garnissage,
dans lequel le substrat (10) présente au moins un premier élément de positionnement (20), la première couche (12) présentant au moins un deuxième élément de positionnement (28), l'au moins un deuxième élément de positionnement (28) étant agencé en dehors de l'au moins un élément de renforcement et/ou de décoration (26), le procédé comprenant une étape d'alignement de la première couche (12) et du substrat (10) par alignement de l'au moins un premier élément de positionnement (20) et de l'au moins un deuxième élément de positionnement (28) avant l'étape de compression.

2. Procédé de fabrication selon la revendication 1, dans lequel l'au moins un premier élément de positionnement (20) et l'au moins un deuxième élément de positionnement (28) sont des orifices traversants définis respectivement dans le substrat (10) et la première couche (12).

3. Procédé de fabrication selon la revendication 1 ou 2, dans lequel la première couche (12) présente sensiblement la taille d'une première face (16) du substrat (10).

4. Procédé de fabrication selon la revendication 1 ou 2, dans lequel la première couche (12) présente une taille strictement inférieure à la taille d'une première face (16) du substrat (10), la première couche (12) s'étendant uniquement sur une première portion de la première face (16) du substrat après l'étape de compression.

5. Procédé de fabrication selon la revendication 4, dans lequel ladite première portion de la première face (16) du substrat (10) comprend au moins un bord (22) du substrat (10), l'au moins un premier élément de positionnement (20) étant agencé à proximité dudit bord (22) du substrat (10).

6. Procédé de fabrication selon l'une quelconque des revendications 1 à 5, dans lequel la première couche (12) est pressée contre une première face (16) du substrat (10) pendant l'étape de compression, le procédé comprenant l'étape de fourniture d'une deuxième couche (14) comprenant une couche de tissu ou de non-tissé, la deuxième couche (14) étant pourvue d'au moins un élément de renforcement et/ou de décoration additionnel (32), la deuxième couche (14) présentant au moins un troisième élément de positionnement (34), l'au moins un troisième élément de positionnement (34) étant agencé en dehors de l'au moins un élément de renforcement et/ou de décoration additionnel (32), la deuxième couche (14) étant alignée avec la première couche (12) et le substrat (10) pendant l'étape d'alignement par alignement de l'au moins un troisième élément de positionnement (34) avec l'au moins un premier élément de positionnement (20) et l'au moins un deuxième élément de positionnement (28), la deuxième couche (14) étant pressée contre une deuxième face (18) du substrat (10) pendant l'étape de compression, la deuxième face (18) étant opposée à la première face (16).

7. Procédé de fabrication selon l'une quelconque des revendications 1 à 6, dans lequel l'au moins un élément de renforcement et/ou de décoration (26) de la première couche (12) est une couche à renforcement uni- ou multi-directionnel tissé ou non-tissé.

8. Procédé de fabrication selon l'une quelconque des revendications 1 à 7, dans lequel l'au moins un élément de renforcement et/ou de décoration (26) de la première couche (12) comprend une matrice et des fibres naturelles, la matrice comprenant entre 10% et 60% de polyuréthane ou de résine époxy.

9. Procédé de fabrication selon l'une quelconque des revendications 1 à 8, dans lequel la couche de base (24) de la première couche (12) comprend au moins 20% de polypropylène, au moins 20% de polyamide, au moins 20% de polyester, ou au moins 20% d'acide polylactique ou est pourvue d'une couche agrippante.

10. Elément de garnissage pour véhicule obtenu par le procédé de fabrication selon l'une quelconque des revendications 1 à 9.

## Patentansprüche

1. Verfahren zur Herstellung eines Verkleidungselements für ein Fahrzeug, umfassend die folgenden Schritte:
- Bereitstellen eines Substrats (10), das Substrat (10) umfassend Naturfasern und thermoplastische Fasern, vorzugsweise Polypropylen oder Polymilchsäure, wobei die Naturfasern und die thermoplastischen Fasern miteinander verwickelt sind,
- Bereitstellen einer ersten Schicht (12), die erste Schicht (12) umfassend eine Grundschicht (24) aus Gewebe oder Vliesstoff, wobei die erste Schicht (12) mit mindestens einem verstärkenden und/oder dekorativen Element (26) versehen ist, und
- Komprimieren der ersten Schicht (12) gegen das Substrat (10), um die erste Schicht (12) an dem Substrat (10) zu befestigen und das Verkleidungselement zu bilden,
wobei das Substrat (10) mindestens ein erstes Positionierungselement (20) aufweist, die erste Schicht (12) mindestens ein zweites Positionierungselement (28) aufweist, wobei das mindestens eine zweite Positionierungselement (28) außerhalb des mindestens einen verstärkenden und/oder dekorativen Elements (26) angeordnet ist, das Verfahren umfassend einen Schritt des Ausrichtens der ersten Schicht (12) und des Substrats (10) durch Ausrichten des mindestens einen ersten Positionierungselements (20) und des mindestens einen zweiten Positionierungselements (28) vor dem Kompressionsschritt.

2. Herstellungsverfahren nach Anspruch 1, wobei das mindestens eine erste Positionierungselement (20) und das mindestens eine zweite Positionierungselement (28) Durchgangslöcher sind, die in dem Substrat (10) bzw. der ersten Schicht (12) definiert sind.

3. Herstellungsverfahren nach Anspruch 1 oder 2, wobei die erste Schicht (12) im Wesentlichen die Größe einer ersten Fläche (16) des Substrats (10) aufweist.

4. Herstellungsverfahren nach Anspruch 1 oder 2, wobei die Größe der ersten Schicht (12) streng kleiner ist als die Größe einer ersten Fläche (16) des Substrats (10), wobei sich die erste Schicht (12) nach dem Kompressionsschritt nur über einen ersten Abschnitt der ersten Fläche (16) des Substrats erstreckt.

5. Herstellungsverfahren nach Anspruch 4, wobei der erste Abschnitt der ersten Fläche (16) des Substrats (10) mindestens eine Kante (22) des Substrats (10) umfasst, wobei das mindestens eine erste Positionierungselement (20) nahe der Kante (22) des Substrats (10) angeordnet ist.

6. Herstellungsverfahren nach einem der Ansprüche 1 bis 5, wobei die erste Schicht (12) während des Kompressionsschritts gegen eine erste Fläche (16) des Substrats (10) gepresst wird, das Verfahren umfassend den Schritt des Bereitstellens einer zweiten Schicht (14), umfassend ein Gewebe oder einen Vliesstoff, wobei die zweite Schicht (14) mit mindestens einem zusätzlichen verstärkenden und/oder dekorativen Element (32) versehen ist, wobei die zweite Schicht (14) mindestens ein drittes Positionierungselement (34) aufweist, wobei das mindestens eine dritte Positionierungselement (34) außerhalb des mindestens einen zusätzlichen verstärkenden und/oder dekorativen Elements (32) angeordnet ist, wobei die zweite Schicht (14) während des Ausrichtungsschritts mit der ersten Schicht (12) und dem Substrat (10) durch Ausrichten des mindestens einen dritten Positionierungselements (34) mit dem mindestens einen ersten Positionierungselement (20) und dem mindestens einen zweiten Positionierungselement (28) ausgerichtet wird, wobei die zweite Schicht (14) während des Kompressionsschritts gegen eine zweite Fläche (18) des Substrats (10) gepresst wird, wobei die zweite Fläche (18) der ersten Fläche (16) gegenüberliegt.

7. Herstellungsverfahren nach einem der Ansprüche 1 bis 6, wobei das mindestens eine verstärkende und/oder dekorative Element (26) der ersten Schicht (12) eine unidirektionale oder multidirektionale Verstärkungsschicht aus Gewebe oder Vliesstoff ist.

8. Herstellungsverfahren nach einem der Ansprüche 1 bis 7, wobei das mindestens eine verstärkende und/oder dekorative Element (26) der ersten Schicht (12) eine Matrix und Naturfasern umfasst, die Matrix umfassend zwischen 10 % und 60 % Polyurethan oder Epoxidharz.

9. Herstellungsverfahren nach einem der Ansprüche 1 bis 8, wobei die Grundschicht (24) der ersten Schicht (12) mindestens 20 % Polypropylen, mindestens 20 % Polyamid, mindestens 20 % Polyester oder mindestens 20 % Polymilchsäure umfasst oder mit einer Greifschicht versehen ist.

10. Verkleidungselement für ein Fahrzeug, erhalten durch das Herstellungsverfahren nach einem der Ansprüche 1 bis 9.

## Claims

1. Method for producing a vehicle trim element, comprising the following steps:
- providing a substrate (10), the substrate (10) comprising natural fibers and thermoplastic fibers, preferably polypropylene or polylactic acid, the natural fibers and the thermoplastic fibers being entangled together,
- providing a first layer (12), the first layer (12) comprising a base layer (24) of woven or non-woven fabric, the first layer (12) being provided with at least one reinforcing and/or decorative element (26), and
- compressing the first layer (12) against the substrate (10) so as to secure the first layer (12) to the substrate (10) and form the trim element,
wherein the substrate (10) has at least one first positioning element (20), the first layer (12) has at least one second positioning element (28), the at least one second positioning element (28) being arranged outside the at least one reinforcing and/or decorative element (26), the method comprising a step of aligning the first layer (12) and the substrate (10) by aligning the at least one first positioning element (20) and the at least one second positioning element (28) prior to the compression step.

2. Production method according to claim 1, wherein the at least one first positioning element (20) and the at least one second positioning element (28) are through-holes defined in the substrate (10) and the first layer (12), respectively.

3. Production method according to claim 1 or 2, wherein the first layer (12) is substantially the size of a first face (16) of the substrate (10).

4. Production method according to claim 1 or 2, wherein the size of the first layer (12) is strictly smaller than the size of a first face (16) of the substrate (10), the first layer (12) extending only over a first portion of the first face (16) of the substrate after the compression step.

5. Production method according to claim 4, wherein said first portion of the first face (16) of the substrate (10) comprises at least one edge (22) of the substrate (10), the at least one first positioning element (20) being arranged near said edge (22) of the substrate (10).

6. Production method according to any one of claims 1 to 5, wherein the first layer (12) is pressed against a first face (16) of the substrate (10) during the compression step, the method comprising the step of providing a second layer (14) comprising a woven or non-woven layer, the second layer (14) being provided with at least one additional reinforcing and/or decorative element (32), the second layer (14) having at least one third positioning element (34), the at least one third positioning element (34) being arranged outside the at least one additional reinforcing and/or decorative element (32), the second layer (14) being aligned with the first layer (12) and the substrate (10) during the alignment step by aligning the at least one third positioning element (34) with the at least one first positioning element (20) and the at least one second positioning element (28), the second layer (14) being pressed against a second face (18) of the substrate (10) during the compression step, the second face (18) being opposite the first face (16).

7. Production method according to any one of claims 1 to 6, wherein the at least one reinforcing and/or decorative element (26) of the first layer (12) is a woven or non-woven uni-directional or multi-directional reinforcing layer.

8. Production method according to any one of claims 1 to 7, wherein the at least one reinforcing and/or decorative element (26) of the first layer (12) comprises a matrix and natural fibers, the matrix comprising between 10% and 60% polyurethane or epoxy resin.

9. Production method according to any one of claims 1 to 8, wherein the base layer (24) of the first layer (12) comprises at least 20% polypropylene, at least 20% polyamide, at least 20% polyester, or at least 20% polylactic acid or is provided with a gripping layer.

10. Vehicle trim element obtained by the production method according to any one of claims 1 to 9.
